# EUROPEAN PATENT APPLICATION

(11) **EP 2 682 244 A2**
(43) Date of publication of application: **08.01.2014**
(21) Application number: 13397523.5
(22) Date of filing: 28.06.2013
(51) Int. Cl.: B29B 17/00, C08J 11/04, D21B 1/00, E04F 15/16, B65F 1/14, E04F 15/10, E04H 4/14, E04H 17/14

(54) **A natural fiber composite element**

(30) Priority: 03.07.2012 FI 20125771
(71) Applicant: UPM-Kymmene Corporation, 00130 Helsinki (FI)
(72) Inventor: Parovuori, Katri, 15560 Nastola (FI); Peltola, Piia, 13100 Hämeenlinna (FI)
(74) Representative: Tampereen Patenttitoimisto Oy

(57) **Abstract**

The invention relates to a composite element 5, which element comprises at least four separate components 1 made of an organic natural material/plastic composite. The components 1 having a first surface 2 and a second surface 4 are positioned parallel to each other with a gap 6 in between. A continuous connecting member 14 is attached at least partially to the second surface 4 of the at least four components 1 to form an interconnected element 5 and to provide reeling of the element. The invention further relates to a method for manufacturing a composite element, combination of an article and a composite element, an arrangement for coating of an article and a use of an element.

## Description

### Field of the Invention

This invention relates to composite components and elements made thereof. This invention further relates to a method for manufacturing the element. Additionally, the invention discloses a use of the element and an arrangement wherein an element is rolled around an article.

### Background of the Invention

Components of natural fiber/polymer composites comprising wood fiber, such as sawdust or milling tailings, may be bonded together through mechanical fixings.

### Summary of the Invention

The present invention discloses a new element of a natural fiber plastic composite. In addition, the invention discloses a method for providing an element. Additionally, the invention discloses a use of a composite element and an arrangement wherein an article is coated using an element.

According to a first aspect of the invention, a composite element is provided. The composite element includes at least four separate components comprising an organic natural material/plastic composite, wherein the components have a first surface, a second surface, a length in a direction of longitudinal axis of the component and a width in a direction of transversal axis of the component. In the element structure the components are positioned parallel to each other in the direction of longitudinal axis having a gap in between. The element further includes at least one continuous connecting member, which is attached at least partially to the second surface of each of the four components in transversal direction of the component to form an interconnected element and to provide reeling of the element around the longitudinal axis.

According to a second aspect of the invention, a use of the element is provided. The element may be used in fences, on floors, on ground surface, in cladding or framing of articles.

According to third aspect of the invention, a method for manufacturing a composite element is provided. The manufacturing comprises providing at least four components comprising organic natural material/plastic composite, providing at least one continuous thermoplastic connecting member, placing the components parallel to each other in the direction of longitudinal axis having a gap in between, attaching the connecting member at least partially to each of the four components in transversal direction using welding so as to form an interconnected element. The element is reelable around the longitudinal axis.

According to a fourth aspect of the invention, a combination of an article and an element is provided. In the combination the element has been attached to the outer surface of the article. The element includes at least four separate components comprising an organic natural material/plastic composite positioned parallel to each other in the direction of longitudinal axis. The parallel components have a gap in between. Further the element includes at least one continuous connecting member attached by welding at least partially to the second surface of each of the four components in transversal direction of the component.

According to a fifth aspect of the invention, there is provided an arrangement for coating of an article, wherein the arrangement comprises an element which has at least one continuous connecting member and at least four components comprising an organic natural material/plastic composite. The component has a first surface, a second surface, a length in a direction of longitudinal axis of the component and a width in a direction of transversal axis of the component. In the arrangement the components of the element are parallel to each other in the direction of longitudinal axis having a gap in between and the connecting member is in contact with at least part of the second surface of each of the four components in transversal direction. Further the element is reeled around the article and fastened with a separate fastening member.

Further embodiments are presented in the dependent claims.

In the composite element the second surface of the component may comprise at least 30%, preferably at least 40%, and most preferably at least 60% organic natural fibers.

The element may comprise at least ten separate components and preferably at least twenty separate components.

The gap between the parallel components may be between 3 and 30 mm, preferably between 5 and 10 mm.

The connecting member may be in the form of an extruded polyolefin strip or a woven polyolefin strip.

The connecting member may be attached by welding.

The article may be a waste disposal container or a hot tub.

The separate fastening member may be a metallic band, which is arranged around the exterior surface of the element.

A separate fastening member, such as screw or nail, may be attached to the length of a connecting member in the gap between the parallel components.

### Description of the Drawings

In the following, the invention will be illustrated by drawings, in which
- Fig. 1: shows, in a cross sectional view, an example structure of a component of an element,
- Fig. 2: shows, in a cross sectional view, an example structure of a component of an element,
- Fig. 3: shows, in a cross sectional view, an example structure of a component of an element,
- Fig. 4: shows an example of an element,
- Fig. 5: shows, in a cross sectional view, an example of an element,
- Fig. 6: shows, in an end view, an example of a rolled element,
- Fig. 7: shows an example of an element installed around an article,
- Fig.8: shows an example of an element installed to the surface of an article.

### Detailed Description of the Invention

The term "element" refers to a prefabricated product comprising several single components, which are connected together. A single component may be a building component, such as a decking board or a cover strip. In the following disclosure, the percentages are by weight, if not otherwise indicated.

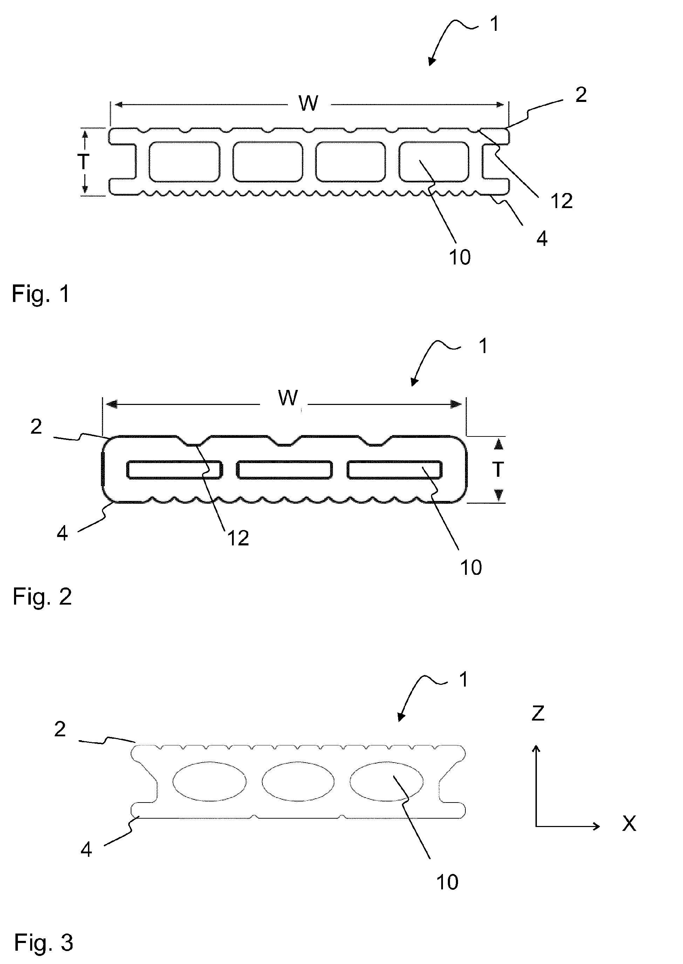

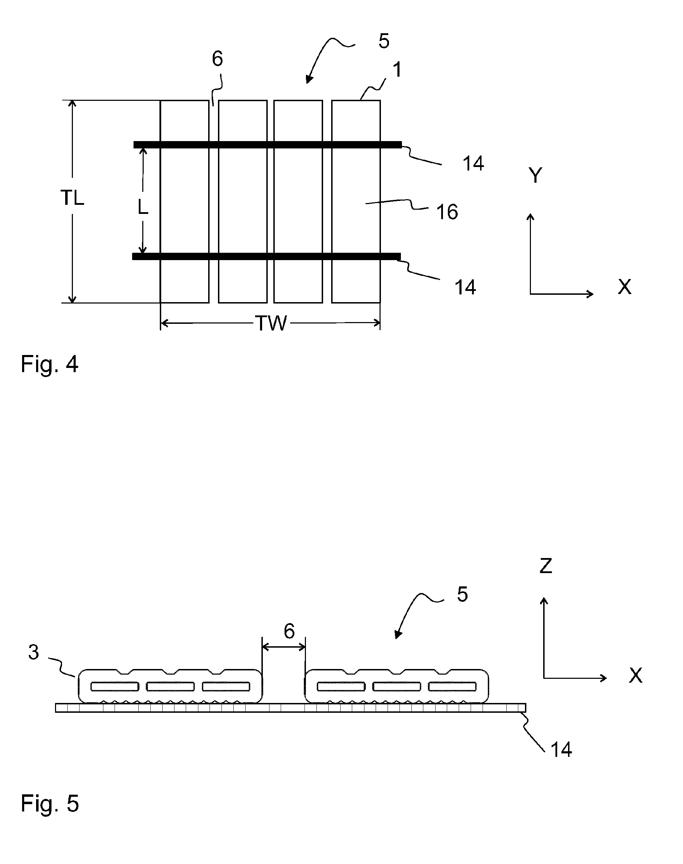

According to one example embodiment and with reference to Fig. 1, a component 1 is a decking board, which has a first surface 2 and a second surface 4. With reference to Fig. 2, a component 1 may be a cover strip having a first surface 2 and a second surface 4. Between the first and the second surface of the component 1 there exists an interior of the component. Still another example embodiment of the structure of a component 1 is presented in Fig. 3. Referring to Fig. 1 and Fig 4. the component has also a width W and a length TL. The length of the component corresponds to a longitudinal direction of the component. The width of the component corresponds to a transversal (cross) direction of the component. The length of the component is at least equal to the width of the component. Preferably, the length of the component is greater than the width of the component. The length of the component may be at most 4 meters, preferably at most 3 meters or at most 2 meters. For example, the length of the component may be between 0.2 and 4 meters or between 0.5 and 3 meters.

The first and second surfaces of the component may be profiled or textured. For example, the surface includes grooves 12. Depth of the grooves may be between 0.2 and 3.0 mm or between 0.5 and 2.0 mm. For example the depth of the groove is 1 mm. Preferably, the grooves are in the direction of longitudinal axis of the component i.e. the grooves extend in parallel to the longitudinal axis of the component. Alternatively the surface is smooth and non-grooved. In an element 5 the first surface 2 of the component forms a part of an external surface or outer surface of the element. The second surface 4 of the component forms a part of an inside surface 16 of the element. Alternatively, the first surface and the second surface may form the inside surface and the outer surface, respectively.

The component is preferably rectangular. Preferably, the component has a length exceeding the width of the component. The width W of the component is preferably at least 40 mm, for example between 40 and 200 mm, more preferably the width of the component is from 50 to 170 mm. The width W of the decking board is, for example, 150 mm. The width of the covering strip is, for example, 66 mm. The thickness of the component is preferably at least 8 mm, for example between 8 and 30 mm. The thickness T of the decking board is, for example 28 mm. The thickness of the cover strip is, for example, 12 mm.

The weight of the component is between 0.3 and 3 kg/m or between 0.5 and 2.9 kg/m. For example, the weight of the decking board and the cover strip is 2.7 kg/m and 0.7 kg/m, respectively. The weight of the component may be controlled through a hollow interior structure of the component. Alternatively, the component is solid, i.e. there is no hollow interior structure. The hollow interior of the component may include several separate holes 10. The hollow structure is made, for example, by extrusion technology. As a result, the total weight of the element may be reduced. Thanks to the decreased weight, not only the handling of the individual components but also the handling of the elements is easier. Thanks to the hollow structure of the component also the amount of needed raw material is decreased, thus decreasing the material costs. In addition, thanks to the hollow structure also the heat during the subsequent joining of the connecting member, i.e. during welding, may be better focused to a specific surface of the component, preferably to the surface to which the connecting member is joined, e.g. to the second surface of the component. The shape and dimensions of the holes may vary. In order to provide adequate strength properties for the components, the oval shaped holes are preferred. The density of the component is at least 0.9 g/cm³, for example 1.1 g/cm³.

The component of the element, e.g. cover strip or decking board, is advantageously made of a polymer composite comprising an organic natural material. In other words, the component is an organic natural material/polymer composite. The organic natural material can be in the form of fibers, such as floccules, flakes, single fibers, or parts of single fibers, or the organic natural material can be in the form of fiber-like particles, such as saw dust or grinded material, where the material does not have exactly spherical form, but the longest particle dimension is less than 5 times longer than the smallest dimension. The organic natural material having a length of at least 0.1 mm, more preferably at least 0.2 mm is called as fiber. Particles smaller than those mentioned above are called as powder or fiber-like particles. Advantageously, the fiber has a shape, in which the ratio of the fiber length to the fiber thickness is at least 5, preferably at least 10, more preferably at least 25 and most preferably at least 40. The organic natural material/polymer composite typically comprises, in addition to organic natural based constituents, e.g. cellulose based fibers, at least one kind of polymer material as a matrix material of the composite. The polymer is preferably thermoplastic polymer, such as polyolefin.

The organic natural material refers to a material that contains cellulose. In other words, the organic natural material can originate from any plant material that contains cellulose, i.e. both wood material and non-wood material can be used. Thus, the organic natural material can come from any plant material that contains cellulose, for example wood material. Alternatively, the natural material is non-wood based material. The polymer composite comprising wood based material may also be referred as a wood plastic composite (WPC).

The wood material can be from softwood trees, such as spruce, pine, fir, larch, douglas-fir or hemlock, or from hardwood trees, such as birch, aspen, poplar, alder, eucalyptus or acacia, or from a mixture of softwoods and hardwoods. Non-wood material can be from agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo or reed.

The component advantageously comprises between 20 and 80% organic natural material, based on the total weight of the composite. The amount of organic material is preferably between 30 and 75%, and more preferably between 40 and 70%. In addition, advantageously at least 30% or at least 40%, more preferably at least 50% or at least 60%, and most preferably at least 80% or at least 90% of the organic natural material is wood based.

In the composite the organic natural material is preferably, at least partly, in the form of fibers. Preferably at least 40 wt. % or at least 50 wt. %, more preferably at least 60 wt. % or at least 70 wt. % and most preferably at least 80 wt. % of the organic natural materials are in the form of fibers.

The organic natural material, such as fibers or fiber-like particles, may be mechanically treated and/or chemically treated. Advantageously, at least 30% or at least 40%, more preferably at least 50% or at least 60%, and most preferably at least 80% or at least 90% of the organic natural material of the component is chemically treated.

The mechanically treated organic natural material may comprise, among other things, wood flour, saw dust, chip material, and/or mechanical pulp such as TMP (thermo mechanical pulp), GW (groundwood pulp) / SGW (stone groundwood pulp), PGW (pressure groundwood pulp), RMP (refiner mechanical pulp), and/or CTMP (chemithermomechanical pulp). The mechanically treated organic natural material preferably comprises or consists of wood particles, such as wood fibers, but they may also comprise or consist of non-wood material. The mechanically treated organic natural material may comprise recycled and/or virgin particles, such as fibers or fiber-like particles. Advantageously at least 30% or at least 40%, more preferably at least 50% or at least 60%, and most preferably at least 80% or at least 90% of the organic natural material used are virgin. Typically, for example, wood plastic composites (WPC) comprise saw dust or at least other mechanically treated wood or plant particles as main organic natural material.

The chemically treated organic natural material comprises, among other things, chemical pulp. The chemical pulp may be, for example, from kraft process or sulfite process, but also other chemical processes may be used, such as a soda pulping process. Preferably, the chemical pulp is from the kraft process. The chemically treated organic natural material preferably comprises or consists of wood based cellulose, but they may also be non-wood material. The chemically treated organic natural material may comprise recycled and/or virgin particles, such as fibers or fiber-like particles.

According to an embodiment, the natural fibers used for the component comprise at least 60% chemically treated natural fibers (i.e. lignin free cellulose fibers), preferably the fibers used for the component comprise at least 70 % or at least 80 %, preferably at least 90 % or at least 95 % chemically treated lignin free cellulose fibers.

In an embodiment, at least part of the organic natural material is in the form of paper sheet or web, board sheet or web, pulp sheet or web, or compacted fiber matrix or pieces of compacted fibers and their combinations.

In an embodiment, at least part of the organic natural material is in the form of large fiber or fiber bundles, paper chaff, pulp chaff, crushed pulp material, derivates thereof and their combinations.

In addition, the component advantageously comprises 20 to 80% thermoplastic polymer(s), preferably 20 to 60%. The thermoplastic polymer may be virgin or recycled. The total amount of the added virgin polymer (if any), such as polypropylene, depends on the other raw material used. For example, if recycled material is used, the amount of added polymer(s) depends on the amount of the different raw materials coming along the recycled material. The component of wood plastic composite preferably comprises at least 70% recycled raw materials and, for example, the only added non-recycled polymer may be polypropylene. Additionally the component may comprise fillers. Fillers may be, for example minerals, such silica, talc, calcium carbonate or wollastonite. The component may also comprise other compounds, such as colours and waxes. The amount of other compounds is less than 10%, preferably less than 5%.

The recycled raw material comprises preferably paper and plastic, most preferably the recycled material comprises paper and thermoplastic polymers which fall as surplus in self-adhesive label production. The proportion of the recycled paper and recycled plastic may vary depending on the product application.

The recycled label material may comprise surplus paper and plastic left over from the production of self-adhesive label materials. In an embodiment, the adhesive label laminate waste originates from adhesive label laminate production, which primarily produces production reject waste, edge cuttings from rolls and roll ends; from adhesive label laminate printing stations, producing primarily roll ends and label material left over from the die cutting of stickers and labels as well as reject; and/or from the end users of the adhesive label laminate, who paste the printed stickers and labels or the like onto their products. The waste coming from the end users is primarily release material, roll ends, and waste from the finished product. The adhesive label laminate waste is typically formed of label material, an adhesive layer, and release material. The liner of the label is usually a paper having a silicone coating or a plastic coating. The polymer is preferably polypropylene. The polymer may also be PVC, polyethylene, polypropylene, polystyrene or polyester. The amount of the adhesive label laminate waste in the component is preferably between 50 and 85%. The adhesive label laminate waste may comprise, for example, 0 to 5% or 1 to 4% adhesives, 0 to 10% or 1 to 9% silicone, 20 to 100% cellulose fibers, and 0 to 100% or 5 to 95% polymers. The amount of additionally dosed plastic polymer(s) in the component is advantageously 15 to 50%.

Inorganic fillers may be added in order to increase the stiffness properties of the product. The amount of fillers in the component, such as decking board, is preferably between 0 and 25%. The fillers preferably consist mostly of talc and/or calcium carbonate and/or fly ash and/or mica and/or glass-filler (i.e. at least 50% of the fillers). The component may be coloured, for example, by using pigments. Therefore, the component may comprise colours.

The component is preferably a natural material/plastic composite, for example a paper plastic composite. The component may be manufactured, for example, by extrusion or by injection moulding process. Advantageously the component is manufactured in an extrusion process using an extruder. The component surface 2, 4 includes, for example, 50 to 75% of natural fibers. The fiber content at the surface of the component is at least 30%, preferably at least 40% and most preferably at least 60%. In addition, the surface includes at least one thermoplastic polymer and additives less than 10%, preferably less than 5%.

Referring to Fig. 4, the element 5 comprises four separate components 1 longitudinally parallel to each other and having a gap 6 between the components. The component has a longitudinal direction according to axis Y and a transversal direction according to axis X. Respectively, the element 5 has a longitudinal direction and a transversal direction. The components are joined together through a continuous and elongated connecting member(s) 14, such as strip(s) so as to form an interconnected element structure. The connecting member 14 is attached onto the second surface 4 of the component perpendicular to the longitudinal axis of the component. In other words, the connecting member is attached in the direction of transversal axis of the component. According to an embodiment the connecting means are continuous and elongated having a length which equals at least the total width WT of the element, i.e. the length of the connecting member is at least equal to the width W of the total number of components and the distance 6 between the components. The elongated connecting member extends along the profiled second surface throughout the total width of the component TW. The connecting member may be adjoined at least partially to the second surface of the component, i.e. the connecting member forms a direct contact with the second surface. The second surface of the component forms a part of an inside surface of the element 16. Alternatively, the connecting means may be attached accordingly onto the first surface of the component. Preferably, the connecting means are on the surface opposite the external surface of the element 5, i.e. on the inside surface of the element.

The number of components in an element depends on the desired (predefined) total width TW of the element, the width of the component W, and the distance 6 between the adjacent (parallel) components. It is also possible to cut an element having a specific width TW from a longer element preform, i.e. from the element preform having a total width greater than the specific width of the element. The longer element preform may comprise, for example between 100 and 1000 separate components. For example, the total width TW of the element may be equivalent to the circumference of the article to be covered with the element.

Preferably, the adjacent single components in the element are not in contact with each other, but there is a gap 6 between the components. The distance 6 between the components depends on the dimension of the component, e.g. the thickness of the component. Advantageously, the gap 6 may be at least 3 mm or at least 6 mm. For example, the gap is between 3 and 30 mm, preferably between 5 and 10 mm. The proportion of the gap from the width of the component is from 3 to 20%, preferably from 5 to 10%. The gaps allow the components in the element to move with respect to each other. However, the connecting members prevent the movement of components vertically in direction Y.

Preferably, the element 5 comprises at least two separate elongated connecting members 14, such as strips. At least one of the connecting members has a length at least equal to the total width TW of the element. The number of the connecting members depends on the total length TL of the element, i.e. the length of the components. Preferably there is at least one connecting member per one meter of length, preferably at least two members per one meter. Advantageously, the connecting member(s) cover at least 1 %, preferably at least 2% or 3% of the length of the component.

According to an embodiment, the element 5 is provided by welding at least a part of one surface of the parallel components 1 onto connecting means 14. Advantageously, the connecting member 14 is continuous circulating the second surface 4 of the parallel components in perpendicular to the longitudinal axis of the component i.e. in the transversal direction of the component. The connecting member forms at least partially a joint with the second surface 4. The joint is formed when the connecting member is welded to the second surface of the component. The element may comprise several separate welded seams on the second surface of the component. Alternatively, the welded seam may be continuous throughout the second surface of the component. Thanks to the continuous connecting members, interconnected element preforms having a specific total width and length can be provided. Preferably, the connecting member is a woven strip and consists of thermoplastic polymer fibers, such as polyolefin fibers. The strip may be, e.g. woven polypropylene strip. Alternatively, the woven strip may be made of other thermoplastic polymer, such as polyethylene strip. Alternatively an extruded thermoplastic polymer strips, thermoplastic polymer bands, wires or multifilaments may be used. The connecting member, for example a strip, may have a width between 5 mm and 10 cm, preferably between 1 and 5 cm.

Welding provides an effective method for bonding together surfaces, wherein one surface comprises a natural material/polymer composite and the other surface comprises thermoplastic polymer. Welding may be performed through heated tool, hot gas, vibration, spin, ultrasonic, induction electromagnetic or laser techniques. Preferably, the welding is ultrasound welding. Alternatively hot plate welding may be used. Welding provides fast and strong bonding of the components onto the connecting means so as to form a durable and flexible element. The welding is also a fast and economical method for providing elements comprising adjoined composite components. Thanks to the element structure wherein the elongated connecting members are directly welded to the second surface of the component, the second surface of the component remains uniform and unbroken. Uniform surface structure is beneficial, for example, in avoiding moisture absorption into the composite component comprising organic natural fibers. In addition, when the connecting member is welded to the composite component(s), the surface of the component remains unbroken and uniform, which is beneficial in order to retaining the mechanical properties of the welded component(s) comparable to the mechanical properties of original intact component. Further, also surface of the connecting member remains unbroken and uniform when welded to the component providing unchanged properties of the strip, such as mechanical properties, i.e. strength. Thanks to the welded strip, also reeling or winding of the element is more reliable i.e. the welded strip stays closed i.e. adhered to the component(s) during reeling. In other words, welded strip does not detach from the component during reeling of the element or when the element is imposed around an exterior surface of curved article, i.e. around an item having curved outer circumference, such as cylindrical waste disposal container.

With reference to Fig. 5, the element 5 comprises two cover strips 3 attached to the elongated strip 14. At least part of a second surface 4 of the component is welded directly onto one surface of the strip. During welding the two surfaces are bonded together without a need of a separate boding or tie layer. In the element 5, there exists also a gap 6 between the adjacent components. In other words, there is a gap between the opposite edges of the parallel components. The gap allows the bending of the element.

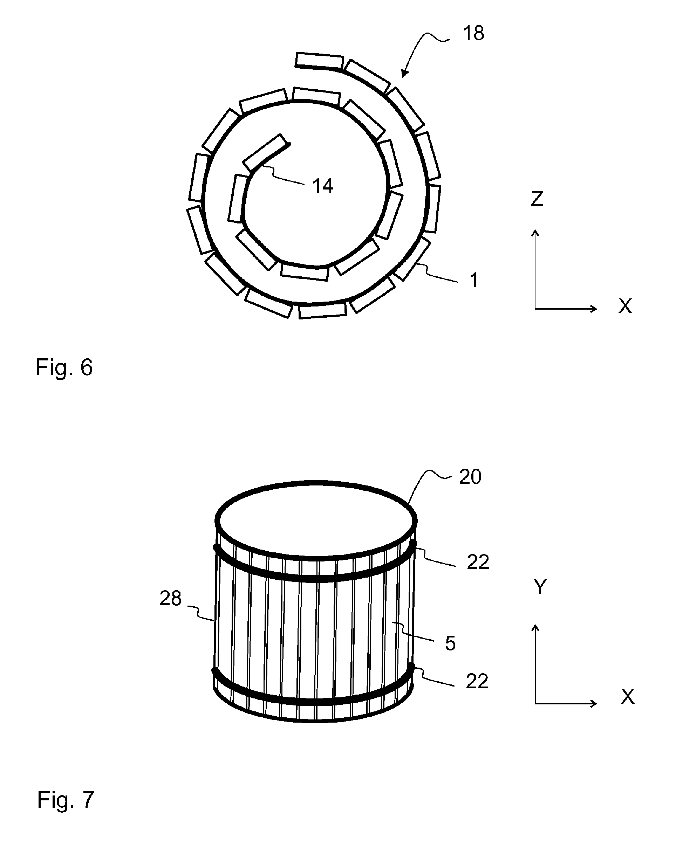

According to an embodiment the elements are ready to use preforms i.e. prefabricated products having specific predefined dimensions. Preforms are especially suitable for outdoor applications. The preforms are deformable around constructions or articles and they provide easy installation of the element. In addition, thanks to the element structure the element can be rolled up to a preform roll, i.e. the element is suitable for reeling, thus facilitating e.g. the storage and transportation of the elements. With reference to Fig. 6, the preform roll 18 consists of the element 5 comprising several components 1 attached together by means of an elongated connecting strip 14. The element 5 is reeled so that the connecting means 14 are inside. The element is reeled around the longitudinal axis Y. The longitudinal axis of the element corresponds to the longitudinal axis of the component 1. Thanks to the element structure the element is flexible and can be used also for cladding or framing of shaped e.g. curved articles. However, the element may also be used to provide a flat fence or flooring. The element structure also allows a thermal expansion of the components. In other words, the connecting method is suitable for components which are expanding and/or contracting due to the changes in temperature of the surroundings.

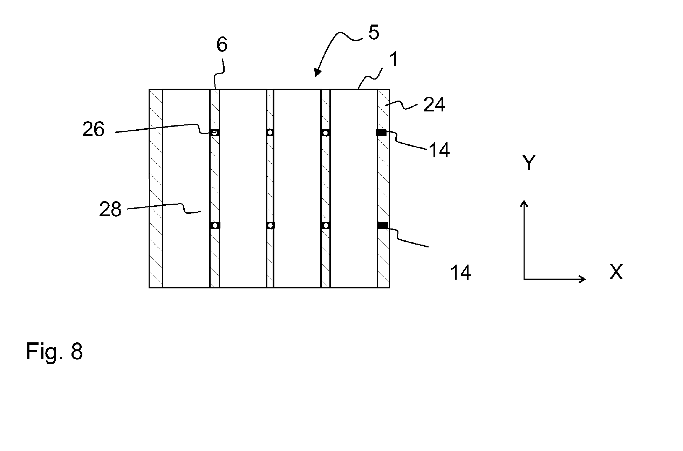

The element is suitable for arranging around the articles. According to an embodiment, the element is used for coating of articles, i.e. for cladding or framing. For example, the element may be used for framing of cylindrical waste disposal containers. The waste disposal containers are used, for example, at parks, rest areas and residential areas. The element is also suitable for framing of hot tubs or bath barrels. With reference to Fig. 7, the element preform 5 is installed by arranging it around an exterior surface (outer surface) of a cylindrical article 20. For example, a diameter of an article may be 300, 500mm, 700mm, 900mm, 1300mm, 1500mm, 1700mm, 2000mm or even greater. For example, the diameter may be between 600 and 2000mm. The element preform is preferably reeled around the article so that the element covers the circumference of the article. It is possible that the article is covered by using one element having a total width TW equivalent to the circumference of the article. Alternatively, the article may be covered by using several separate elements, wherein the separate element has TW less than the circumference of the article. As an example, TW of the element may be between 0.5 and 8m, or between1.5 and 6 m. The shape of the article may also be angular, for example, it may have four or more corners, e.g. the article may have a hexagonal structure. Further, the element 5 is fastened outside the element with separate fastening member(s) 22 in order to secure the fixing of the element. The fastener 22 may be, for example, a metallic band, such as a stainless steel band which can be arranged around the exterior surface 28 of the element. With reference to Fig. 8, the element preform 5 is attached to the surface of the article 24 by using separate fastener(s). The element 5 is installed to the surface of an article 24 with a separate fastening member(s), such as with screws or nails 26, at the length of a connecting member 14 in the gap 6 between the parallel components. Thanks to the installing of the element through a connecting member 14 the external surface 28 of the element remains intact. In order to secure the fixing the element is fixed with at least two fastening members. The element is also suitable for used as a fence. The element preform roll may also be unwound and directly used as such on the ground or floor. The element is also suitable for re-winding. If the element is used as such there may be no need for further fastening and the element is easily displaceable. The element is preferably used in outdoor applications or in humid environments, such as in bathrooms or saunas.

The embodiments described above are only exemplary embodiments of the invention and a person skilled in the art recognizes readily that they may be combined in various ways to generate further embodiments without deviating from the basic underlying invention.

## Claims

1. A composite element comprising:
at least four separate components comprising an organic natural material/plastic composite, wherein the components have a first surface, a second surface, a length in a direction of longitudinal axis of the component and a width in a direction of transversal axis of the component, and wherein the components are positioned parallel to each other in the direction of longitudinal axis having a gap in between; and
at least one continuous connecting member attached by welding at least partially to the second surface of each of the four components in transversal direction of the component to form an interconnected element and to provide reeling of the element around the longitudinal axis.

2. The composite element according to claim 1, wherein the second surface of the component comprises at least 30%, preferably at least 40%, and most preferably at least 60% organic natural fibers.

3. The composite element according to claim 1 or 2, wherein the element comprises at least ten separate components and preferably at least twenty separate components.

4. The composite element according to any of the preceding claims, wherein the gap between the parallel components is between 3 and 30 mm, preferably between 5 and 10 mm.

5. The composite element according to any of the preceding claims, wherein the connecting member is in the form of an extruded polyolefin strip or a woven polyolefin strip.

6. Use of an element according to any of the preceding claims in fences, on floors, on ground surface, in cladding or framing of an article.

7. A method for manufacturing a composite element, the method comprising:
providing at least four components comprising organic natural material/plastic composite;
providing at least one continuous thermoplastic connecting member,
placing the components parallel to each other in the direction of longitudinal axis having with a gap in between; and
attaching the connecting member at least partially to each of the four components in transversal direction using welding so as to form an interconnected element, which is reelable around the longitudinal axis.

8. A combination of an article and a composite element, wherein the element has been arranged to an outer surface of the article, the element comprising:
at least four separate components comprising an organic natural material/plastic composite positioned parallel to each other in the direction of longitudinal axis having a gap in between, and at least one continuous connecting member attached by welding at least partially to the second surface of each of the four components in transversal direction of the component.

9. A combination according to claim 8, wherein the article is a waste disposal container or a hot tub.

10. An arrangement for coating of an article, the arrangement comprising:
a composite element, which has at least one continuous connecting member and at least four components comprising an organic natural material/plastic composite and having a first surface, a second surface, a length in a direction of longitudinal axis of the component and a width in a direction of transversal axis of the component, in which arrangement the components of the element are parallel to each other in the direction of longitudinal axis having a gap in between and
the connecting member is in contact with at least part of the second surface of each of the four components in transversal direction, and in which arrangement the element is reeled around the article and further fastened with a separate fastening member.

11. The arrangement according to claim 10, wherein the separate fastening member is a metallic band, which is arranged around the exterior surface of the element.

12. The arrangement according to claim 10, wherein the separate fastening member is attached to the length of a connecting member in the gap between the parallel components.

13. The arrangement according to any of the preceding claims 10-12, wherein the article is a waste disposal container or a hot tub.
